# FASCICULE DE BREVET EUROPEEN

(11) **EP 3 615 379 B1**
(45) Date de publication et mention de la délivrance du brevet: **24.02.2021**
(21) Numéro de dépôt: 18722099.1
(22) Date de dépôt: 28.03.2018
(51) Int. Cl.: B60Q 1/30, H05B 47/175

(54) **SYSTÈME EMBARQUÉ DE VÉHICULE AUTOMOBILE DESTINÉ À ALIMENTER ET À PILOTER DES FEUX D'UNE REMORQUE CONNECTÉE**
BORDNETZ FÜR EIN KRAFTFAHRZEUG ZUR STROMVERSORGUNG UND STEUERUNG DER LEUCHTEN EINES ANGESCHLOSSENEN ANHÄNGERS
ON-BOARD SYSTEM FOR A MOTOR VEHICLE INTENDED TO POWER AND CONTROL THE LIGHTS OF A CONNECTED TRAILER

(30) Priorité: 25.04.2017 FR 1753544
(43) Date de publication de la demande: 04.03.2020
(73) Titulaire: PSA Automobiles SA, 78300 Poissy (FR)
(72) Inventeur: DHAINAUT, Jean Marc, 75007 Paris (FR)
(86) Numéro de dépôt international: PCT/FR2018/050760
(87) Numéro de publication internationale: WO 2018/197768

(56) Documents cités:
- US-A1- 2005 134 448
- US-A1- 2006 085 099
- US-A1- 2009 122 571
- US-A1- 2012 280 807

## Description

La présente invention concerne de manière générale un système d'alimentation et de pilotage, embarqué dans un véhicule automobile (ou tout type de véhicule routier : véhicule utilitaire léger, camion, autocar, camping-car, véhicule de chantier, engin agricole, ...), destiné à alimenter électriquement et à piloter des feux équipant une remorque connectée au véhicule automobile par un faisceau d'attelage remorque.

D'emblée, on notera que le terme « remorque » désigne ici tout véhicule ou objet destiné à être tiré par un véhicule automobile tracteur. Il peut s'agir d'une remorque utilitaire pour le transport de divers matériaux, objets ou autres, une caravane, un porte-vélos, etc... Il peut aussi désigner un objet, éventuellement dépourvu de roues, porté à l'arrière du véhicule automobile tracteur au moyen du crochet d'attelage, par exemple un porte-vélos ou une plate-forme d'extension utilisée sur des véhicules utilitaires transformés.

Pour des raisons de sécurité et de réglementation, la remorque doit être équipée de dispositifs d'éclairage, ou « feux », de signalisation, notamment des feux-stop (ou de freinage), des feux de position, un ou des feux de brouillard et des feux de clignotant.

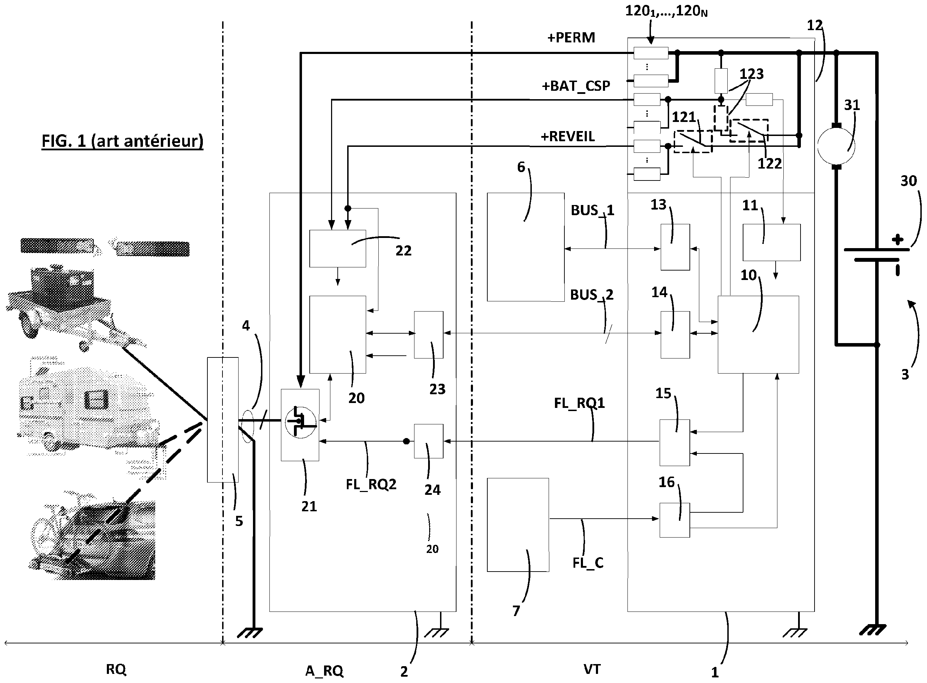

Sur la figure 1, on a représenté un système embarqué d'alimentation et de pilotage de feux d'une remorque RQ connectée à un véhicule automobile VT, selon l'art antérieur.

Afin d'assurer l'alimentation électrique et le pilotage des feux de la remorque RQ, le véhicule automobile VT tracteur intègre un système d'alimentation 3 comportant notamment une batterie d'alimentation électrique 30 et un alternateur 31, un calculateur central véhicule 1 et un boîtier d'interface 2 spécifique pour remorque, que l'on appellera par la suite « boîtier d'interface remorque », comme représenté sur la figure 1.

Le boîtier d'interface remorque 2 peut être monté soit en usine (en « première monte »), soit ultérieurement, chez le garagiste en après-vente (en « deuxième monte »).

Le boîtier d'interface remorque 2 est connecté à la remorque RQ par l'intermédiaire d'un faisceau d'attelage 4 et d'une prise remorque 5. Il comprend généralement un calculateur électronique intégrant une unité de commande 20, un régulateur d'alimentation 22, des moyens 23, 24 d'interface de liaison avec un calculateur central, et un dispositif 21 d'alimentation et de pilotage des feux de la remorque comportant des commutateurs (généralement des transistors de puissance). L'unité de commande 20 est destinée à commander le fonctionnement du boîtier 2. Le boîtier d'interface remorque 2 est relié au calculateur central 1 par l'intermédiaire d'un bus BUS_2, ou réseau, de communication multiplexé (par exemple CAN LSFT, CAN HS, CAN FD, LIN, ...) ainsi que par une liaison filaire FL_RQ1 de transmission d'un signal de commande de feux stop.

Les feux de la remorque RQ sont pilotés par le boîtier d'interface remorque 1 du véhicule automobile VT, par l'intermédiaire des commutateurs 21, à partir de commandes transmises par le calculateur central véhicule 1 via le bus de communication multiplexé BUS_2, en fonction de l'état d'activation des feux du véhicule.

Le boîtier d'interface remorque 2 peut également remonter au calculateur central véhicule 1 des informations de diagnostic sur les feux de la remorque, via le bus multiplexé BUS_2.

Dans le cas d'une remorque telle qu'une caravane, le boîtier d'interface pilote également des alimentations commutées destinées à l'alimentation électrique d'un éclairage intérieur et d'un équipement électrique (par exemple un réfrigérateur) de la remorque.

Le pilotage des feux stop fait l'objet d'un schéma de commande particulier pour répondre à des contraintes de temps de réponse et de sûreté de fonctionnement et tenir compte des différentes causes d'allumage des feux stop, comme cela va être maintenant explicité.

Une première cause d'allumage des feux stop est un appui du conducteur sur une pédale de frein du véhicule. Un capteur de pédale de frein 7, connecté au calculateur central véhicule 1, permet de détecter l'appui du conducteur sur la pédale de frein. Ce capteur 7 émet alors un signal d'appui pédale et de commande de feux stop, qui est transmis, d'une part, à un microcontrôleur 10 du calculateur central véhicule 1 et, d'autre part, au boîtier d'interface remorque 2 via la liaison filaire FL_RQ1 entre le calculateur central véhicule 1 et le boîtier d'interface remorque 2. La transmission du signal émis par le capteur de pédale de frein 7 directement du capteur 7 au boîtier d'interface remorque 2 et en utilisant la liaison filaire FL_RQ1 permet d'obtenir un temps de réponse quasi-instantané.

Une deuxième cause d'allumage des feux stop est une information de freinage envoyée par un calculateur de freinage 6 (par exemple ABS, ESP ou autre) au calculateur central véhicule 1 via le réseau multiplexé BUS_1. Cette information de freinage peut servir de redondance par rapport au signal d'appui sur la pédale de frein ou d'informer d'un freinage activé par le calculateur de freinage sans action du conducteur sur la pédale de frein. Elle permet également de diagnostiquer le capteur de pédale de frein 7 par contrôle de cohérence entre les deux informations reçues du capteur 7 et du calculateur de freinage 6.

Le calculateur central véhicule 1 transmet également des signaux de commande des feux stop au boîtier d'interface remorque 2, via deux canaux de communication différents :
- le bus de communication multiplexé BUS_2, sur ordre du microcontrôleur 10 du calculateur central véhicule ;
- la liaison filaire FL_RQ1 à travers laquelle sont transmis, d'une part, le signal d'appui de pédale de frein provenant du capteur de pédale de frein 7 et, d'autre part, un signal de commande généré par le microcontrôleur 10 du calculateur central véhicule 1 à partir de l'information reçue du capteur de pédale de frein 7 et/ou de l'information reçue du calculateur de freinage 6.

Cette architecture de commande des feux stop de la remorque permet un temps de réponse réduit grâce à l'utilisation de signaux filaires, sans passer par des logiciels intégrés au calculateur central véhicule 1 ou au boîtier d'interface remorque 2, dans le cas d'un freinage activé par un appui du conducteur sur la pédale de frein. Elle permet également une redondance de commande pour une garantie de sécurité.

Le boîtier d'interface remorque 2 est alimenté par la batterie 30 du véhicule automobile VT, délivrant une tension nominale qui est le plus souvent de 12V (mais peut avoir une valeur différente selon les véhicules), par l'intermédiaire de plusieurs alimentations :
- une alimentation de puissance permanente, « +PERM », destinée à alimenter les commutateurs (généralement des transistors de puissance) qui servent à piloter les feux de la remorque et ont une consommation nominale relativement forte (environ quelques dizaines d'ampères lorsque tous les feux de la remorque sont allumés) mais une consommation de veille très faible (de l'ordre de quelques µA) liée aux courants de fuite dans les transistors de puissance ;
- une alimentation coupée sur parc, « +BAT_CSP », destinée à alimenter le reste de l'électronique du boîtier d'interface, dont le microcontrôleur, qui a une consommation nominale relativement faible (-100 mA) mais une consommation de veille non négligeable (∼1 mA) ;
- une alimentation commutée « +Réveil », utilisé lorsque le véhicule est réveillé, permettant de réveiller le boîtier d'interface remorque et pouvant également servir de redondance à l'alimentation +BAT_CSP.

Ces différentes alimentations permettent de gérer les différentes phases de consommation du boîtier d'interface remorque 2, notamment lorsqu'il en veille profonde, en veille nominale ou à l'état réveillé, comme explicité ci-après.

Entre sa fabrication et sa première mise en circulation par un client, le véhicule automobile est susceptible de rester immobilisé plusieurs semaines avec son moteur arrêté. Cela risque de conduire à une décharge de sa batterie 30 du fait de la consommation électrique des différents équipements électriques et/ou électroniques présents sur le véhicule. Afin de limiter cette décharge, il est connu d'équiper le véhicule d'un dispositif tel qu'un « shunt » 123 d'activation sélective d'un état pour mode d'alimentation du véhicule parmi deux états ou modes possibles, à savoir :
- un état ou mode « client » dans lequel le véhicule est pleinement opérationnel mais a une consommation de veille nominale ;
- un état ou mode « parc » dans lequel le véhicule dispose de fonctionnalités limitées, juste suffisantes pour démarrer et déplacer le véhicule (par exemple, ouverture de la porte conducteur à l'aide d'une clé au lieu d'une ouverture centralisée par télécommande ou en mains libres), et a par conséquent une consommation électrique de veille très limitée.

Le véhicule est assemblé en usine avec le shunt 123 en position « parc » et celui-ci est déplacé en position « client » lors de la préparation du véhicule neuf, avant livraison au client. Lorsqu'il est placé en position parc, le shunt permet de couper l'alimentation permanente de différents équipements consommateurs et de les réalimenter lorsque le conducteur met le contact.

Ainsi, le boîtier d'interface remorque 2 dispose de trois alimentations différentes afin de réduire de façon efficace sa consommation électrique lorsqu'il est en veille profonde et en veille nominale. Un inconvénient majeur de ces multiples alimentations est le coût au niveau du câblage et des boîtiers fusibles, que ce soit pour l'option première monte ou pour la prédisposition du véhicule pour de la deuxième monte en après-vente. Un autre inconvénient est la masse de ce câblage. On connait par le document US20120280807 un convertisseur comprenant une alimentation, un microcontrôleur et un capteur de courant. Le microcontrôleur est connecté à une alimentation électrique et est configuré pour recevoir des entrées d'un véhicule et des signaux de sortie vers des charges d'un deuxième véhicule. On connait aussi par le document US2005134448 un système indicateur de signal de véhicule automobile à distance comprenant un émetteur couplé à une ligne de commande de signal d'indication de véhicule. L'émetteur transmet sans fil un signal d'activation de récepteur correspondant à un signal d'indication de véhicule de la ligne de commande de signal d'indication de véhicule. On connait aussi par le document US20090122571 un appareil d'éclairage intelligent adapté pour fournir des communications sans fil entre un véhicule et une remorque. On connait aussi par le document US2006085099 un procédé de commande de dispositifs électroniques connectés à un connecteur de remorquage de remorque de véhicule.

La présente invention vient améliorer la situation.

A cet effet l'invention concerne un système embarqué de véhicule automobile destiné à alimenter électriquement et à piloter des feux équipant une remorque connectée électriquement au véhicule automobile, comprenant
- un calculateur central véhicule,
- un dispositif d'alimentation électrique,
- un boîtier d'interface remorque connecté au dispositif d'alimentation électrique et comprenant une unité de commande de l'alimentation et du pilotage des feux et
- une liaison filaire, entre le calculateur central véhicule et le boîtier d'interface remorque, de transmission d'un signal de commande de feux stop pour signaler un freinage du véhicule,
caractérisé en ce que
- le boîtier d'interface remorque comprend un organe de commutation d'alimentation, par l'intermédiaire duquel l'unité de commande est connectée au dispositif d'alimentation électrique, ledit organe de commutation étant relié à la liaison filaire de transmission d'un signal de commande de feux stop;
- le calculateur central véhicule est agencé pour transmettre un signal de commande de réveil à travers la liaison filaire de transmission d'un signal de commande de feux stop ;
- l'organe de commutation d'alimentation est agencé pour être activé et déclencher l'alimentation électrique de l'unité de commande du boîtier d'interface remorque sur réception du signal de commande de réveil à travers la liaison filaire.

Grâce à cela, le boîtier d'interface remorque peut être connecté à une seule alimentation et sa consommation électrique peut être adaptée de façon efficace, en fonction des besoins, afin de contribuer à réduire la décharge du dispositif d'alimentation électrique.

Avantageusement, le système comprend également une liaison multiplexée (par exemple de type CAN LSFT, CAN HS, CAN FD, LIN, ...) de communication entre le calculateur central véhicule et le boîtier d'interface remorque.

Dans un mode de réalisation particulier de l'invention, après déclenchement de l'alimentation électrique de l'unité de commande du boîtier d'interface remorque, ladite unité de commande est agencée pour transmettre à l'organe de commutation un signal de commande de maintien d'alimentation adapté pour maintenir l'activation de l'organe de commutation et ainsi l'alimentation de l'unité de commande du boîtier d'interface remorque après le signal de commande de réveil.

Une fois l'alimentation électrique de l'unité de commande du boîtier d'interface remorque déclenchée, elle est auto-maintenue par l'unité de commande.

Le signal de commande de réveil peut comprendre une impulsion de tension d'une durée suffisante pour permettre à l'unité de commande du boîtier d'interface remorque de se réveiller, après démarrage de l'alimentation électrique, puis de commencer à émettre un signal de commande ou « d'auto-maintien » pour maintenir l'activation de l'organe de commutation. La durée d'impulsion doit donc être supérieure (même légèrement supérieure) à la durée nécessaire au réveil de l'unité de commande au démarrage de l'alimentation, afin de permettre à cette unité de commande du boîtier d'interface remorque de prendre le relais du signal de réveil et de maintenir l'activation du commutateur d'alimentation par un signal d'auto-maintien. Le temps de réveil d'un boîtier d'interface au démarrage de son alimentation peut être de 100 à 300 millisecondes environ. La durée de l'impulsion de réveil est typiquement de plusieurs centaines de millisecondes, par exemple supérieure à 300 millisecondes, par exemple encore de l'ordre de 500 millisecondes.

Avantageusement, le boîtier d'interface remorque ayant un état de veille nominale, dans lequel l'organe de commutation d'alimentation est activé, et un état de veille profonde, dans lequel l'organe de commutation est désactivé, le calculateur central véhicule est agencé pour transmettre ledit signal de commande de réveil lors d'un réveil seulement si le boîtier d'interface remorque est en veille profonde.

Avantageusement encore, le boîtier d'interface remorque ayant un état de veille nominale, dans lequel l'organe de commutation d'alimentation est activé, et un état de veille profonde, dans lequel l'organe de commutation est désactivé, le calculateur central est agencé pour transmettre une trame de mise en veille profonde au boîtier d'interface remorque à travers un réseau multiplexé.

De préférence, le boîtier d'interface remorque est connecté uniquement à une alimentation permanente fournie par le dispositif d'alimentation électrique.

L'unité de commande du boîtier d'interface de remorque peut comprendre une entrée de réveil, reliée à la liaison filaire de transmission d'un signal de commande de feux stop et agencée pour recevoir le signal de commande de réveil, l'unité de commande étant agencée pour passer dans un état réveillé sur réception dudit signal de commande de réveil sur ladite entrée de signal.

Dans une forme de réalisation particulière, l'organe de commutation d'alimentation comprend un commutateur piloté par une porte logique OU à deux entrées de pilotage respectivement reliées à l'unité de commande du boîtier d'interface remorque et à ladite liaison filaire.

L'invention concerne aussi un boîtier d'interface remorque pour véhicule automobile, agencé pour alimenter électriquement et piloter des feux équipant une remorque connectée électriquement au véhicule automobile, comportant une première interface de connexion à une alimentation externe, une unité de commande, une deuxième interface de connexion à une liaison filaire externe de transmission d'un signal de commande d'allumage de feux stop de remorque, caractérisé en ce qu'il intègre un organe de commutation d'alimentation, par l'intermédiaire duquel ladite unité de commande est reliée à la première interface de connexion, agencé pour être activé et déclencher l'alimentation électrique de ladite unité de commande sur réception d'un signal de commande de réveil à travers la deuxième interface de connexion.

Avantageusement, après déclenchement de l'alimentation électrique de l'unité de commande, ladite unité de commande est agencée pour transmettre à l'organe de commutation un signal de commande de maintien d'alimentation adapté pour maintenir l'activation de l'organe de commutation et ainsi l'alimentation de l'unité de commande après le signal de commande de réveil.

L'invention concerne encore un véhicule automobile comportant au moins un système embarqué tel que précédemment défini ou un boîtier d'interface remorque tel que défini ci-dessus.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une architecture d'un système embarqué d'alimentation et de pilotage de feux d'une remorque selon l'art antérieur ;
- la figure 2 représente une architecture d'un système embarqué d'alimentation et de pilotage de feux d'une remorque selon un exemple de réalisation de l'invention ;
- la figure 3 représente, à titre d'exemple illustratif, un chronogramme de commandes lors d'une période de temps comportant successivement une veille profonde, un premier réveil, une veille nominale, un deuxième réveil puis une nouvelle veille profonde.

Par souci de clarté, les éléments identiques, analogues ou correspondants représentés sur les différentes figures portent les mêmes références, sauf indication spécifique contraire.

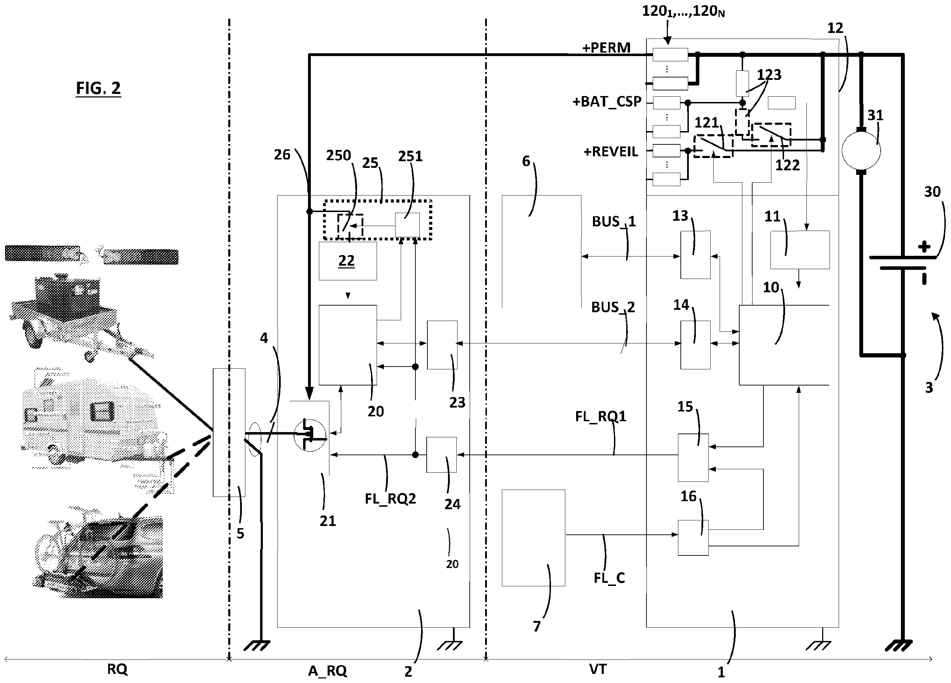

La figure 2 représente un ensemble comportant
- un véhicule tracteur « VT » automobile ;
- une remorque « RQ » (par exemple une remorque utilitaire, une caravane, un porte-vélos ou autre véhicule tracté) ;
- un dispositif d'attelage remorque « A_RQ ».

Le dispositif d'attelage remorque A_RQ assure une liaison mécanique et une liaison électrique entre le véhicule tracteur VT et la remorque R.

La remorque RQ est équipée de feux de signalisation et d'un faisceau électrique reliant les feux de signalisation à une prise remorque 5 permettant de connecter la remorque RQ au véhicule tracteur VT. Les feux de signalisation comprennent ici au moins des feux stop, des feux de position et des feux de clignotant. Ils peuvent aussi comporter un ou plusieurs feux de brouillard et un ou plusieurs feux de recul. Dans le cas d'une remorque telle qu'une caravane, d'autres équipements électriques (par exemple réfrigérateur, dispositif d'éclairage intérieur, ou autre) peuvent équiper la remorque.

Par souci de clarté, seuls les éléments du véhicule tracteur VT nécessaires à la compréhension de l'invention vont maintenant être décrits.

Le véhicule tracteur VT comporte :
- un calculateur central véhicule 1 ;
- un dispositif d'alimentation électrique 3 ;
- un dispositif d'attelage remorque, qui sera détaillé plus loin ;
- un calculateur de freinage 6 (par exemple ABS ou ESP) ;
- un capteur d'appui de pédale de frein 7 ;
- des éléments d'interface homme-machine ou « IHM », non représentés, tels que des boutons et manettes de commande, témoins de signalisation, bipeur ou « buzzer », contacteur d'antivol de direction, etc..

Le dispositif d'attelage remorque comporte un crochet d'attelage, un faisceau d'attelage remorque 4 et un boîtier d'interface remorque 2. Le crochet d'attelage est fixé à la structure du véhicule tracteur VT et permet d'accrocher mécaniquement la remorque RQ au véhicule tracteur VT. Le faisceau d'attelage remorque 4 dispose d'une prise remorque 5 destinée à être connectée à la prise remorque de la remorque RQ et de connexion au faisceau du véhicule VT. Le boîtier d'interface remorque 2 est ici un calculateur, également appelé « calculateur attelage remorque », ayant pour rôle d'alimenter électriquement et de commander les feux de signalisation de la remorque RQ (et le cas échéant tout autre dispositif électrique ou actionneur de la remorque RQ), sur commande du calculateur central véhicule 1. Une autre fonction du boîtier d'interface remorque 2, non détaillée ici, est de remonter des informations de diagnostic au calculateur central véhicule (présence de la remorque RQ, types de feux de la remorque RQ, défaut sur un feu, etc.).

Le dispositif d'alimentation électrique 3 du véhicule tracteur VT comprend ici une batterie d'alimentation électrique 30 et un alternateur 31 de recharge de la batterie 30. La batterie 30 est ici adaptée pour délivrer une tension nominale de 12V, la tension réelle fournie pouvant varier légèrement en fonction des conditions d'utilisation de la batterie 30. On pourrait envisager de prévoir plusieurs batteries.

Le calculateur central véhicule 1 pilote les principales fonctions du véhicule VT, notamment l'éclairage, la signalisation, la gestion des états de veille et de réveil du véhicule VT et la gestion de diverses alimentations commutées du véhicule VT (couramment appelées BAT_CSP (+ Coupé sur Parc), +Réveil (réseaux multiplexés réveillés), +ACC (+Accessoires), +APC (+Après-contact)). Il comprend une unité de commande 10, par exemple un microcontrôleur, un régulateur d'alimentation 11, un boîtier de fusibles et de relais 12 et diverses interfaces de connexion externe. Le boîtier de fusibles et de relais 12 a pour fonction d'assurer la fourniture d'une alimentation permanente et d'alimentations commutées à des équipements consommateurs (ou charges) du véhicule VT, notamment au calculateur d'attelage remorque 2, ainsi que la protection de ces diverses alimentations.

Le boîtier 12 comprend des fusibles 120₁,..., 120_{N} et des relais (ou commutateurs) 121, 122. Dans l'exemple de réalisation décrit ici, le boîtier 12 comporte également un dispositif 123 d'activation sélective d'un état ou mode d'alimentation électrique du véhicule tracteur VT parmi deux états ou modes possibles comprenant un premier état ou mode d'alimentation électrique réduite, également appelé état ou mode « parc », et un deuxième état ou mode d'alimentation électrique nominale, également appelé état ou mode « client ». Dans l'état d'alimentation « client », le véhicule VT est pleinement opérationnel et, en veille, a une consommation de veille nominale ou normale. En veille « nominale », une unité de commande 20 du calculateur attelage remorque 2 est alimentée électriquement mais elle a un mode de fonctionnement basse consommation, en ralentissant sa fréquence de fonctionnement et de scrutation de ses interfaces d'entrée, et se réveille sur détection d'une activité sur le réseau de communication multiplexé du véhicule. Dans l'état d'alimentation « parc », la veille est généralement profonde, mais peut également être nominale pendant une période de temps limitée. La veille « profonde » contribue à préserver l'état de charge de la batterie 30 lors d'un stockage de longue durée du véhicule VT. En veille profonde, le véhicule dispose de fonctionnalités limitées, juste suffisantes pour démarrer et déplacer le véhicule (par exemple, ouverture de la porte conducteur à l'aide d'une clé au lieu d'une ouverture centralisée par télécommande ou en mains libres), et a par conséquent une consommation électrique de veille très limitée, inférieure à la consommation de veille nominale. En particulier, en veille profonde, l'unité de commande 20 du calculateur attelage remorque 2 n'est pas alimentée électriquement.

Le dispositif d'activation sélective de l'état d'alimentation électrique comprend par exemple un shunt 123 déplaçable manuellement. Le véhicule VT peut être assemblé en usine avec le shunt 123 en position « parc » (comme représenté en pointillés par la position basse du shunt 123 sur la figure 2), de manière à configurer le véhicule dans le premier état d'alimentation « parc ». Puis le shunt 123 peut être déplacé en position « client » (comme représenté en trait plein par la position haute du shunt 123 sur la figure 2), lors de la préparation du véhicule neuf avant livraison au client, afin de configurer le véhicule VT dans le deuxième état d'alimentation « client ». Lorsqu'il est placé en position parc, le shunt 123 permet de couper l'alimentation permanente de différents équipements consommateurs et de les réalimenter lorsque le conducteur met le contact. Lorsqu'il est placé en position client, le shunt 123 permet de fournir une alimentation permanente à différents équipements consommateurs ou charges. On notera que le shunt 123 est un exemple particulier de réalisation d'une solution d'activation sélective de l'état d'alimentation électrique. En variante, le shunt peut être remplacé par un commutateur manuel (curseur ou rotatif) à deux positions ou par un commutateur (relais ou transistor de puissance) commandé par l'électronique du calculateur central du véhicule en association avec une Interface Homme Machine (pouvant être réalisée par un outil de diagnostic ou par une combinaison de commandes du véhicule ou par une commande dans un menu de configuration de l'écran du système d'affichage du véhicule).

Le boîtier 12 est interposé entre le dispositif d'alimentation 3 et les éléments consommateurs d'énergie électrique. Il est connecté en entrée à la batterie 30 et fournit en sortie plusieurs alimentations différentes par l'intermédiaire de plusieurs ensembles différents de connecteurs d'alimentation, chacun connecteur étant relié à un fusible de protection. Le boîtier 12 peut être intégré ou non au calculateur central véhicule 1. Il peut être réalisé en une seule partie ou en plusieurs parties disposées à divers emplacements dans le véhicule (habitacle, sous-capot, coffre). Sur la figure 2, on a représenté trois alimentations différentes, pourvues respectivement de trois ensembles de connecteurs d'alimentation. Ces trois alimentations comprennent :
- une alimentation de puissance permanente « +PERM » permettant d'alimenter en permanence des éléments consommateurs, notamment des commutateurs du calculateur attelage remorque 2 qui servent à piloter les feux de la remorque RQ ;
- une alimentation « +BAT_CSP », coupée sur parc, c'est-à-dire interrompue ou coupée lorsque le véhicule est dans le premier état de consommation « parc » ;
- une alimentation commutée « +Réveil », utilisée et opérationnelle lorsque le véhicule VT est réveillé.

L'unité de commande 10 est reliée au dispositif d'alimentation 3 par l'intermédiaire du boîtier fusibles et relais 12 et d'un régulateur d'alimentation 11 destiné à réguler la tension d'alimentation fournie à une valeur de référence Vref.

Le calculateur central véhicule 1 comporte également plusieurs éléments d'interface de connexion pour assurer des liaisons avec d'autres dispositifs du véhicule tels que des calculateurs et des capteurs. Il comprend notamment
- un émetteur-récepteur de ligne 13 de liaison avec le calculateur de freinage 6 par l'intermédiaire d'un bus multiplexé BUS_1, par exemple CAN ou Flexray,
- un émetteur-récepteur de ligne 14 de liaison avec le calculateur attelage remorque par l'intermédiaire d'un bus multiplexé BUS_2, par exemple CAN ou LIN,
- une interface entrée filaire 16 de réception d'un signal d'appui de pédale de frein, reliée en entrée au capteur de pédale de frein 7 par une connexion filaire (simple fil) FL_C et en sortie à l'unité de commande 10 et à une porte logique « OU » décrite ci-dessous ;
- une interface sortie comportant une porte logique « OU » 15 reliée en entrée à l'unité de commande 10 et à l'interface entrée 16 du capteur de pédale de frein 7 et en sortie au calculateur attelage remorque 2 par une connexion filaire FL_RQ1.

Les liaisons filaires FL_C et FL_RQ1 et les interfaces entrée 16 et sortie 15, directement reliées entre elles, permettent de transmettre un signal de commande de feux stop, généré par le capteur 7 en cas d'appui sur la pédale de frein, par une transmission filaire directe, sans traitement logiciel intermédiaire.

Ainsi, le calculateur central véhicule 1 est relié au calculateur attelage remorque 2 par un bus (ou réseau) de communication multiplexé BUS_2 et par une liaison filaire de transmission d'un signal de commande de feux stop.

Le calculateur attelage remorque 2, ou boîtier d'interface remorque, a pour fonction d'alimenter électriquement et de piloter des feux de signalisation, notamment les feux stop, équipant une remorque RQ connectée électriquement au véhicule automobile tracteur VT. Il comprend :
- une unité de commande 20, par exemple un microcontrôleur, destinée à commander l'alimentation et le pilotage des feux de signalisation de la remorque RQ, et plus généralement le fonctionnement du calculateur 2,
- un dispositif de pilotage et d'alimentation 21 comportant des commutateurs (tels que des transistors de puissance), des relais et divers composants d'entrée/sortie,
- un régulateur d'alimentation 22,
- une interface 23 de communication multiplexée (ici un émetteur récepteur de ligne) avec le réseau ou bus de communication multiplexé BUS_2 de liaison au calculateur central véhicule 1,
- une interface de connexion filaire 24 d'entrée du signal de commande feux stop, reliée à la liaison filaire FL_RQ1,
- une interface 26 de connexion à une alimentation externe, ici à une alimentation permanente +PERM fournie par le dispositif d'alimentation 3.

Le dispositif 21 est relié, d'une part, à la prise remorque 5 et, d'autre part, à l'unité de commande 20 et à l'interface d'entrée filaire 24. La liaison entre le dispositif 21 et l'interface d'entrée filaire 24 comprend une liaison filaire interne FL_RQ2 permettant de prolonger la liaison filaire FL_RQ1 entre les calculateurs 1 et 2. On note FL_RQ la liaison filaire reliant le capteur de pédale de frein 7 et le dispositif de pilotage et d'alimentation 21, comportant les portions de fil FL_C, FL_RQ1 et FL_RQ2, connectées entre elles. Le dispositif 21 est adapté pour assurer l'alimentation, le pilotage et le diagnostic des charges de la remorque, notamment des feux de signalisation, sur commande de l'unité de commande 20 et du signal de commande de feux stop transmis à travers la liaison filaire FL_RQ1 et FL_RQ2. Le dispositif 21 est relié l'interface 26 de connexion à l'alimentation externe.

Le régulateur d'alimentation 22 est destiné à réguler la tension d'alimentation fournie à l'unité de commande 20 à une valeur de référence Vref. Il est interposé entre l'interface de connexion 26 et l'unité de commande 20.

Selon l'invention, le calculateur attelage remorque 2, ou boîtier d'interface remorque, intègre également un organe de commutation d'alimentation 25, par l'intermédiaire duquel le régulateur d'alimentation 22 de l'unité de commande 20 est connectée à l'interface de connexion à l'alimentation externe, ici l'alimentation permanente +PERM. Autrement dit, l'organe de commutation 25 est interposé entre le régulateur d'alimentation 22 de l'unité de commande 20 et l'interface 26 de connexion au dispositif 3 d'alimentation du véhicule VT. Sur la figure 2, l'organe de commutation 25 est interposé entre le régulateur d'alimentation 22 et l'interface 26. En variante, il pourrait être intégré dans le régulateur 22. Dans l'exemple de réalisation décrit ici, l'organe de commutation 25 comprend un commutateur 250 (par exemple un transistor de puissance) et une porte logique OU 251 (par exemple réalisée par deux diodes) destinée à piloter le commutateur 250. Cette porte logique OU est pourvue de deux entrées de pilotage respectivement reliée à l'unité de commande 20 et à la liaison filaire FL_RQ2 de transmission du signal de commande de feux stop (par exemple par une dérivation). L'organe de commutation 25 est agencé pour être activé (c'est-à-dire commuter en position fermée) lorsqu'il reçoit un signal de commande provenant de l'unité de commande 20 ou un signal de commande provenant de la liaison filaire FL_RQ2 (ou les deux signaux de commande à la fois) et pour être désactivé (c'est-à-dire commuter en position ouverte) lorsqu'il ne reçoit aucun signal de commande sur ses deux entrées de pilotage.

Dans le mode de réalisation décrit ici, le calculateur attelage remorque 2 est relié uniquement à l'alimentation permanente +PERM. Il n'est relié à aucune autre alimentation (notamment ni à l'alimentation BAT_CSP, ni à l'alimentation +Réveil). Grâce à cela, on limite sensiblement la quantité et la masse de câblage nécessaire pour alimenter le calculateur attelage remorque.

Le calculateur attelage remorque 2 de l'invention intègre son propre organe de commutation d'alimentation 25, par l'intermédiaire duquel son unité de commande 20 est connectée à l'alimentation permanente +PERM. Cet organe de commutation 25 est relié à la liaison filaire FL_RQ de transmission d'un signal de commande de feux stop. Le calculateur central véhicule 1 est agencé pour transmettre un signal de commande de réveil à travers la liaison filaire FL_RQ. Sur réception de ce signal de commande de réveil, l'organe de commutation 25 est agencé pour être activé et ainsi déclencher l'alimentation électrique de l'unité de commande 20 du boîtier d'interface remorque 2. Dans un second temps, après déclenchement de l'alimentation électrique de l'unité de commande 20, celle-ci est agencée pour transmettre à l'organe de commutation 25 un signal de commande de maintien d'alimentation adapté pour maintenir l'activation de l'organe de commutation 25 et ainsi l'alimentation de l'unité de commande 20 après le signal de commande de réveil (comprenant par exemple une simple impulsion de courte durée). Enfin, le calculateur attelage remorque 2 est agencé pour passer en veille profonde sur réception d'une trame de mise en veille profonde, à travers le réseau de communication multiplexé BUS_2, transmise par le calculateur central véhicule 1. Sur réception de cette trame, l'unité de commande 20 cesse de transmettre le signal de commande de maintien de l'alimentation, ce qui a pour effet de désactiver l'organe de commutation d'alimentation 25.

Dans une forme de réalisation particulière, l'unité de commande 20 du calculateur attelage remorque 2 comprend une interface d'entrée de réveil, reliée à la liaison filaire FL_RQ2, destinée pour recevoir le signal de commande de réveil. L'unité de commande 20 est alors agencée pour passer dans un état réveillé, autrement dit démarrer son fonctionnement nominal, sur réception de ce signal de commande de réveil.

L'invention s'appuie ainsi sur l'architecture de pilotage des feux stop de la remorque RQ, notamment sur la liaison filaire FL_RQ destinée à transmettre un signal « filaire » de commande de feux stop provenant directement du capteur de pédale de frein 7 (c'est-à-dire non traité par une unité de commande), afin de permettre au calculateur central véhicule 10 de réveiller le calculateur attelage remorque 2 en état de veille profonde, lors d'un réveil. Plus précisément, le calculateur central véhicule 1 est agencé pour transmettre le signal de commande de réveil sur la liaison filaire FL_RQ lors d'un réveil seulement si le boîtier d'interface remorque est en veille profonde, par exemple lors d'un réveil du véhicule VT lorsque celui-ci sort d'un état de veille « profonde » en parc (par exemple après ou lors d'un stockage du véhicule entre sa fabrication et sa remise au client ou lors de son transport vers un lieu de livraison au client).

On va maintenant décrire le processus d'alimentation du calculateur attelage remorque dans différentes situations.

### Mise en veille profonde initiale en mode « parc »

On suppose ici que le shunt 123 est placé en position « parc », le véhicule VT étant par conséquent dans l'état d'alimentation « parc ».

Lors d'une mise en veille profonde du véhicule VT, préalable à son stockage sur parc ou son transport, le calculateur central véhicule 1 envoie au calculateur attelage remorque 2 via le réseau de communication multiplexé BUS_2 une trame de commande de mise en veille profonde. Le calculateur attelage remorque 2 désactive alors l'organe de commutation 25, sur commande de l'unité de commande 20 afin de couper l'alimentation électrique de l'unité de commande 20, puis passe dans un état inactif dans lequel ne subsistent que de très faibles courants de fuite des transistors de puissance du dispositif de pilotage et d'alimentation 21 et de l'organe de commutation 25.

### Réveil en mode « parc »

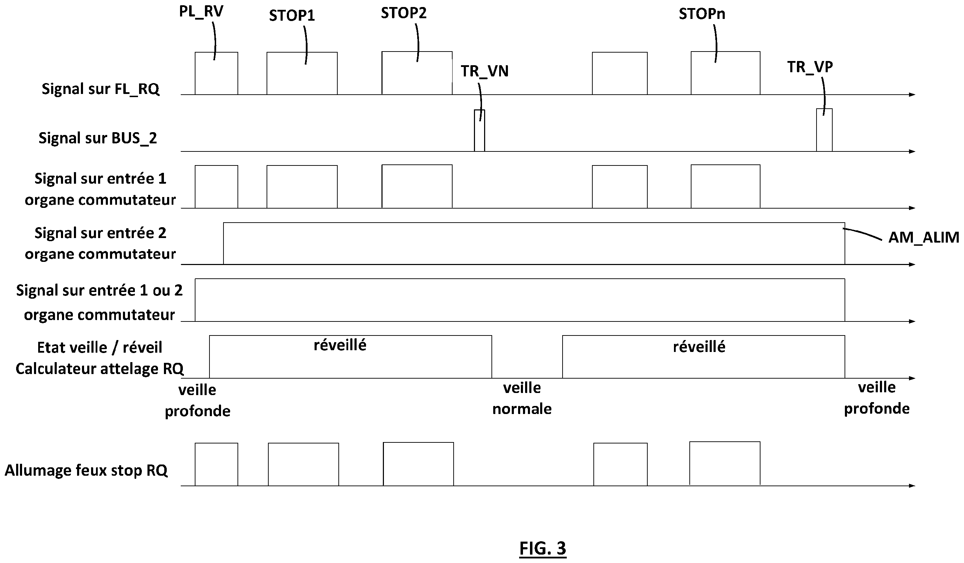

En référence à la figure 3, supposons maintenant que le véhicule VT est réveillé, alors qu'il était dans un état de veille profonde, par exemple par ouverture de la porte conducteur du véhicule VT à l'aide d'une clé puis la mise du contact à l'aide de la clé ou par appui sur le push de contact / démarrage. Le calculateur central véhicule 10 est d'abord réveillé de façon connue. A son réveil, l'unité de commande 10 du calculateur central véhicule 1 envoie un signal de commande de réveil à travers la liaison filaire FL_RQ1 de transmission du signal de commande de feux stop. Le signal de commande de réveil comprend par exemple une impulsion de tension PL_RV (ou « pulse »). Cette impulsion PL_RV est transmise en entrée de l'organe de commutation 25, et plus précisément à une entrée de pilotage de la porte logique OU 251, ce qui a pour effet de commander l'activation du commutateur d'alimentation 250 et par conséquent le déclenchement de l'alimentation électrique de l'unité de commande 20.

De façon additionnelle, dans l'exemple de réalisation décrit ici, l'impulsion de réveil PL_RV est également reçue par l'interface d'entrée de réveil de l'unité de commande 20.

Après activation de l'organe de commutation 25, le régulateur 22 est de nouveau alimenté par l'alimentation permanente +PERM et l'unité de commande 20 du calculateur attelage remorque 2 est de nouveau alimentée par l'intermédiaire du régulateur 22. Une fois alimentée, l'unité de commande 20 redémarre, suite à l'acquisition de l'impulsion de réveil sur son entrée de réveil. On pourrait toutefois envisager que l'unité de commande 20 redémarre dès lors qu'elle est de nouveau alimentée.

Une fois redémarrée, l'unité de commande 20 transmet un signal de commande d'auto-maintien de son alimentation, noté AM_ALIM, à l'organe de commutation 25. Ce signal AM_ALIM est reçu par la deuxième entrée de pilotage de la porte logique OU 251 de l'organe de commutation 25. La transmission de ce signal de commande AM_ALIM de l'unité de commande 20 à l'organe de commutation d'alimentation 25 débute avant la fin de l'impulsion de réveil PL_RV et dure tant que le calculateur attelage remorque ne reçoit pas de trame de mise en veille profonde.

La durée de l'impulsion de réveil PL_RV doit être suffisante pour permettre à l'unité de commande 20 de se réveiller, au démarrage de son alimentation via le commutateur 250 activé, puis de commencer à émettre un signal de commande ou « d'auto-maintien » AM_ALIM pour maintenir l'activation de l'organe de commutation 25. La durée de l'impulsion de réveil PL_RV est donc supérieure (ou légèrement supérieure) à la durée de réveil de l'unité de commande 20 au démarrage de son alimentation, de manière à ce que l'unité de commande du boîtier d'interface remorque puisse prendre le relais du signal de réveil PL_RV et maintenir l'activation de l'organe de commutation d'alimentation par le signal d'auto-maintien AM_ALIM. Le temps de réveil d'un boîtier d'interface au démarrage de son alimentation étant typiquement de 100 à 300 millisecondes environ, la durée de l'impulsion de réveil est donc plusieurs centaines de millisecondes, par exemple supérieure à 300 millisecondes, par exemple encore de l'ordre de 500 millisecondes.

Ainsi, sans ajout d'une nouvelle liaison dédiée pour le réveil, le calculateur central véhicule 1 est capable de réveiller le calculateur attelage remorque 2 en veille profonde.

Lors de la phase de réveil qui vient d'être décrite, un bref allumage intempestif des feux stop peut se produire, du fait du dispositif hardware intégré dans le calculateur attelage remorque 2 permettant un pilotage direct du commutateur des feux stop de la remorque RQ par le signal « filaire » de commande des feux stop. Mais ceci n'est pas gênant, compte tenu du fait qu'une remorque n'est généralement pas connectée au véhicule VT à ce moment là et que, en toute hypothèse, cet allumage intempestif des feux stop serait bref.

Après cette phase de réveil, le calculateur attelage remorque 2 est réveillé et totalement alimenté. Il peut donc fonctionner normalement. Le calculateur attelage remorque 2 maintient son alimentation électrique par la génération et l'envoi par l'unité de commande 20 du signal de commande d'auto-maintien d'alimentation AM_ALIM à l'organe de commutation 25.

Supposons maintenant que le véhicule VT est démarré et que le conducteur appuie sur la pédale de frein. Dans ce cas, à chaque appui sur la pédale de frein, le capteur de pédale de frein 7 transmet sur la liaison filaire FL_RQ un signal de commande d'allumage de feux stop (notés STOP1, STOP2, etc. sur la figure 3). Si une remorque RQ est connectée au véhicule VT, ces signaux de commande STOP1, STOP2, etc. permettent d'allumer les feux stop de la remorque RQ. Il sont également reçus par l'une des entrées de pilotage de l'organe de commutation 25, mais cela ne produit aucun effet particulier puisque l'autre entrée de pilotage de l'organe de commutation 25 reçoit déjà un signal de commande d'auto-maintien d'alimentation AM_ALIM de l'unité de commande 20.

### Passage en veille normale

Supposons maintenant que le véhicule VT est arrêté et que le contact est éteint. Après une première duréee de temporisation prédéfinie, le calculateur attelage remorque 2 passe dans un état de veille normale ou nominale, sur réception d'une trame de mise en veille normale TR_VN transmise par le calculateur central véhicule à travers le réseau multiplexé BUS_2. Dans ce cas, le calculateur attelage remorque 2 réduit sa consommation électrique à une consommation de veille nominale en ralentissant sa fréquence de fonctionnement et de scrutation de ses entrées. Toutefois, son microcontrôleur 20 continue de transmettre à l'organe de commutation 25 le signal d'auto-maintien d'alimentation AM_ALIM de sorte que le microcontrôleur 20 reste alimenté par l'alimentation permanente +PERM. Dans cet état de veille normale, le calculateur 2 se réveille sur détection d'une activité sur le bus de communication multiplexé BUS_2.

### Nouvelle mise en veille profonde

Supposons maintenant que le véhicule VT passe en veille profonde, sur réception d'une commande IHM spécifique ou après une deuxième durée de temporisation (supérieure à la première durée de temporisation de passage en veille normale).

Dans ce cas, le calculateur central véhicule 10 transmet une trame de mise en veille profonde TR_VP (représentée sur la figure 3) au calculateur attelage remorque 2 à travers le réseau multiplexé BUS_2, avant de passer lui-même en veille profonde.

### Commutation en mode « client » et réveil

On suppose maintenant que le dispositif shunt 123 est déplacé en position client et que le véhicule VT est réveillé.

Le processus de réveil du calculateur attelage remorque 2 est analogue à celui précédemment décrit lorsque le véhicule est en mode parc. Dès qu'il est réveillé, le calculateur central véhicule 10 transmet un signal de commande de réveil PL_RV au calculateur attelage remorque 2, à travers la liaison filaire FL_RQ de transmission du signal de commande de feux stop, comme précédemment décrit. Sur réception de ce signal PL_RV sur sa première entrée de pilotage, l'organe de communication 25 est activé et déclenche l'alimentation de l'unité de commande 20. L'unité de commande 20 est alors de nouveau alimentée par l'alimentation permanente et redémarre sur réception du signal de réveil PL_RV. Une fois redémarrée, l'unité de commande 20 transmet en continu un signal de commande d'auto-maintien de son alimentation, AM_ALIM, à l'organe de commutation 25. Ce signal AM_ALIM est reçu par la deuxième entrée de pilotage de la porte logique OU 251 de l'organe de commutation 25. La transmission de ce signal de commande AM_ALIM de l'unité de commande 20 à l'organe de commutation d'alimentation 24 démarre avant la fin de l'impulsion de réveil PL_RV et dure tant qu'une trame de mise en veille profonde n'est pas reçue à travers le réseau de communication multiplexé BUS_2.

Le véhicule étant en mode d'alimentation client, il n'envoie pas de trame de mise en veille profonde au calculateur d'attelage remorque 2 notamment lorsque le calculateur central véhicule 2 passe en veille normale.

Toutefois, en cas de stockage prolongé en utilisation client, par exemple si le véhicule n'est pas utilisé pendant des vacances ou si le véhicule est dédié à une résidence secondaire, on pourrait envisager de permettre à un utilisateur du véhicule d'activer le passage en mode de veille « profonde » par l'intermédiaire d'un élément d'IHM spécifique (combinaison de commandes ou menu particulier dans un écran).

En résumé, le signal de commande de réveil à travers la liaison filaire FL_RQ1 de transmission du signal de commande de feux stop, a une double fonction :
- Véhiculer une demande de pilotage des feux stop de la remorque (de façon redondante, et plus réactive, par rapport à la demande de pilotage via le réseau multiplexé (BUS_2)) générée par le calculateur central véhicule 1:
   o A partir d'un capteur de pédale de frein FL_C, de type tout ou rien ou de type analogique, connecté à une entrée le calculateur central véhicule 1.
   o A partir d'une demande acquise par le calculateur central véhicule 1 sur un réseau multiplexé (BUS_1) et provenant par exemple d'un calculateur de freinage 6, ABS ou ESP, par exemple dans le cas d'un freinage initié sans action du conducteur sur la pédale de frein (freinage automatique sur détection de risque de collision, action de l'ESP pour corriger la trajectoire du véhicule, ...).
- Véhiculer une demande réveil du calculateur d'interface remorque 2 sur demande calculateur central véhicule 1. Cette demande de réveil peut être concomitante à une demande d'allumage des feux stop, mais peut aussi correspondre dans certains cas de réveil particuliers à une demande de réveil dé-corrélée d'une demande d'allumage de feux stop par le conducteur ou par le calculateur de freinage. Ce cas correspond en particulier à la demande de réveil du calculateur d'interface remorque 2 par le calculateur central véhicule 1 lorsque le véhicule et le calculateur d'interface remorque 2 sont dans un mode veille « profonde ».

Le mode de veille « profonde » est utilisé dans le cas d'un stockage de très longue durée du véhicule, afin de préserver au maximum la charge de la batterie du véhicule, en diminuant la consommation des calculateurs et notamment celle du calculateur d'interface remorque 2 bien en dessous de leur consommation de veille « nominale » ou « normale » (gain d'une facteur 10 au moins).

Le stockage de très longue durée peut correspondre au stockage ou au transport (sur train, camion, bateau) du véhicule, entre sa fabrication et sa livraison au client ou à une longue durée d'inutilisation du véhicule par le client (par ex. lorsque le véhicule laisse son véhicule sur le parking d'un aéroport alors qu'il part un mois en vacances ou lorsqu'il laisse un véhicule dans une résidence secondaire, par exemple tout l'hiver).

Pour atteindre une consommation extrêmement basse (quelques dizaines de µA tout au plus), l'homme de l'art comprendra qu'un simple mode veille de l'unité de commande ou microcontrôleur 20 du calculateur d'interface remorque 2, dans lequel ledit microcontrôleur ralentit son fonctionnement en baissant sa fréquence d'horloge et en sa fréquence de scrutation de ses entrées, n'est pas suffisant.

C'est pourquoi l'invention utilise un commutateur 250 permettant de couper l'alimentation 22 du microcontrôleur 20 du calculateur d'interface remorque 2 lorsque ledit calculateur est dans le mode de veille « profonde ».

Lequel mode de veille « profonde » est provoqué par l'arrêt de la commande du commutateur 250 par le microcontrôleur 20 du calculateur d'interface remorque 2 lorsque celui-ci reçoit l'ordre de passage en mode de veille « profonde » de la part du calculateur central véhicule 1 au moyen du réseau multiplexé (BUS_2). Le calculateur central véhicule 1 peut décider du passage en mode de veille « profonde » sur différents critères (demande de l'utilisateur au moyen de l'IHM, temps d'inutilisation du véhicule supérieur à une certaine durée, diminution de l'état de charge de la batterie, avant que celle-ci ne permette plus le redémarrage du véhicule).

Une fois le calculateur d'interface remorque 2 passé en mode de veille « profonde », l'homme de l'art comprendra que le microcontrôleur 20 du calculateur d'interface remorque 2 ne pourra se réveiller en scrutant ses entrées filaires ou multiplexées puisqu'il n'est plus alimenté, le commutateur 250 étant ouvert.

C'est là qu'intervient le signal de commande de réveil à travers la liaison filaire FL_RQ1 de transmission du signal de commande de feux stop, qui peut, sur ordre du calculateur central véhicule 1, commander le commutateur 250 au travers de la logique (251, « OU ») et ainsi réalimenter le microcontrôleur 20 du calculateur d'interface remorque 2. Dans ce cas, même si, dans le cas où la remorque est connectée au véhicule tracteur au moment de cette sortie de veille « profonde », on peut constater un bref allumage des feux stop de la remorque, la signification du un signal de commande de réveil à travers la liaison filaire FL_RQ1 de transmission du signal de commande de feux stop, n'est pas une demande d'allumage des feux stop mais une demande de réveil du calculateur d'interface remorque 2 suite à une veille profonde.

L'activation du un signal de commande de réveil à travers la liaison filaire FL_RQ1 de transmission du signal de commande de feux stop, n'est dans ce cas généralement pas provoquée par l'appui sur la pédale de frein ni par une demande du calculateur de freinage, mais par une demande de sortie de veille « profonde » du véhicule par le calculateur central véhicule 1.

## Revendications

1. Système embarqué de véhicule automobile destiné à alimenter électriquement et à piloter des feux équipant une remorque (RQ) connectée électriquement au véhicule automobile (VT), comprenant
- un calculateur central véhicule (1),
- un dispositif d'alimentation électrique (3),
- un boîtier d'interface remorque (2) connecté au dispositif d'alimentation électrique (3) et comprenant une unité (20) de commande de l'alimentation et du pilotage des feux stop équipant la remorque (RQ) et
- une liaison filaire (FL_RQ1, FL_RQ2), entre le calculateur central véhicule (1) et le boîtier d'interface remorque (2), de transmission d'un signal de commande de feux stop pour signaler un freinage du véhicule,
**caractérisé en ce que**
- le boîtier d'interface remorque (2) comprend un organe de commutation d'alimentation (25), par l'intermédiaire duquel l'unité de commande (20) est connectée au dispositif d'alimentation électrique (3), ledit organe de commutation (25) étant relié à la liaison filaire (FL_RQ1, FL_RQ2) de transmission du signal de commande de feux stop;
- le calculateur central véhicule (1) est agencé pour transmettre un signal de commande de réveil à travers la liaison filaire (FL_RQ1, FL_RQ2) de transmission d'un signal de commande de feux stop ;
- l'organe de commutation d'alimentation (25) est agencé pour être activé et déclencher l'alimentation électrique de l'unité de commande (20) du boîtier d'interface remorque (2) sur réception du signal de commande de réveil à travers la liaison filaire (FL_RQ1, FL_RQ2).

2. Système selon la revendication 1, **caractérisé en ce que**, après déclenchement de l'alimentation électrique de l'unité de commande (20) du boîtier d'interface remorque (2), ladite unité de commande (20) est agencée pour transmettre à l'organe de commutation (25) un signal de commande de maintien d'alimentation adapté pour maintenir l'activation de l'organe de commutation (25) et ainsi l'alimentation de l'unité de commande (20) du boîtier d'interface remorque (2) après le signal de commande de réveil.

3. Système selon l'une des revendications précédentes, **caractérisé en ce que**, le boîtier d'interface remorque (2) ayant un état de veille nominale, dans lequel l'organe de commutation d'alimentation (25) est activé, et un état de veille profonde, dans lequel l'organe de commutation d'alimentation (25) est désactivé, le calculateur central véhicule (1) est agencé pour transmettre ledit signal de commande de réveil lors d'un réveil seulement si le boîtier d'interface remorque (2) est en veille profonde.

4. Système selon la revendication précédente, **caractérisé en ce que**, le calculateur central véhicule (1) est agencé pour transmettre une trame de mise en veille profonde au boîtier d'interface remorque (2) à travers un réseau multiplexé (BUS_2).

5. Système selon l'une des revendications précédentes, **caractérisé en ce que** le boîtier d'interface remorque (2) est connecté uniquement à une alimentation permanente (+PERM) fournie par le dispositif d'alimentation électrique (3).

6. Système selon l'une des revendications précédentes, **caractérisé en ce que** l'unité de commande (20) du boîtier d'interface de remorque (2) comprend une entrée de réveil, reliée à la liaison filaire de transmission du signal de commande de feux stop et agencée pour recevoir le signal de commande de réveil, l'unité de commande (20) étant agencée pour passer dans un état réveillé sur réception dudit signal de commande de réveil sur ladite entrée de signal.

7. Système selon l'une des revendications précédentes, **caractérisé en ce que** l'organe de commutation d'alimentation (25) comprend un commutateur (250) piloté par une porte logique OU (251) à deux entrées de pilotage respectivement reliées à l'unité de commande (20) du boîtier d'interface remorque (2) et à ladite liaison filaire (FL_RQ1, FL_RQ2).

8. Boîtier d'interface remorque (2) pour véhicule automobile (VT), agencé pour alimenter électriquement et piloter des feux équipant une remorque (RQ) connectée électriquement au véhicule automobile (VT), comportant une première interface (26) de connexion à une alimentation externe fournie par un dispositif d'alimentation électrique (3) du véhicule automobile (VT), une unité (20) de commande de l'alimentation électrique et du pilotage des feux stop de la remorque (RQ), une deuxième interface (24) de connexion à une liaison filaire externe (FL_RQ1) de transmission d'un signal de commande d'allumage de feux stop de remorque, **caractérisé en ce qu'**il intègre un organe de commutation d'alimentation (25), par l'intermédiaire duquel ladite unité de commande (20) est reliée à la première interface de connexion (26), ledit organe de commutation d'alimentation (25) étant agencé pour être activé et déclencher l'alimentation électrique de ladite unité de commande (20) sur réception d'un signal de commande de réveil à travers la deuxième interface de connexion (24).

9. Boîtier d'interface remorque selon la revendication précédente, **caractérisé en ce que**, après déclenchement de l'alimentation électrique de l'unité de commande (20), ladite unité de commande (20) est agencée pour transmettre à l'organe de commutation (25) un signal de commande de maintien d'alimentation adapté pour maintenir l'activation de l'organe de commutation (25) et ainsi l'alimentation de l'unité de commande (20) après le signal de commande de réveil.

10. Véhicule automobile comportant au moins soit un système embarqué selon l'une des revendications 1 à 7 soit un boîtier d'interface remorque selon l'une des revendications 8 ou 9.

## Patentansprüche

1. Kraftfahrzeug-Bordsystem, das zur elektrischen Versorgung und Steuerung von Leuchten bestimmt ist, die einen mit dem Kraftfahrzeug (VT) elektrisch verbundenen Anhänger (RQ) ausstatten, umfassend
- einem zentralen Fahrzeugrechner (1),
- eine Stromversorgungseinrichtung (3),
- einer Anhänger-Schnittstellenbox (2), die mit der Stromversorgungseinrichtung (3) verbunden ist und eine Einheit (20) zur Steuerung der Stromversorgung und der Steuerung der am Anhänger (RQ) angebrachten Bremsleuchten umfasst, und
- eine drahtgebundene Verbindung (FL_RQ1, FL_RQ2) zwischen dem FahrzeugZentralrechner (1) und der Anhänger-Interface-Box (2) zur Übertragung eines Bremslicht-Steuersignals, um eine Bremsung des Fahrzeugs zu signalisieren,
in diesem
- die Anhänger-Schnittstellenbox (2) ein Stromversorgungs-Schaltglied (25) umfasst, über das die Steuereinheit (20) mit der Stromversorgungseinrichtung (3) verbunden ist, wobei das Schaltglied (25) mit der Drahtverbindung (FL_RQ1, FL_RQ2) zur Übertragung des Bremslicht-Steuersignals verbunden ist;
- der Fahrzeugzentralrechner (1) eingerichtet ist, ein Wecksteuersignal über die verdrahtete Bremslichtsteuersignal-Übertragungsstrecke (FL_RQ1, FL_RQ2) zu übertragen;
- das Stromversorgungs-Schaltelement (25) so angeordnet ist, dass es aktiviert wird und die Stromversorgung der Steuereinheit (20) der Anhänger-Schnittstellenbox (2) bei Empfang des Weck-Steuersignals über die verdrahtete Verbindung (FL_RQ1, FL_RQ2) auslöst.

2. System nach Anspruch 1, **dadurch gekennzeichnet, dass** die Steuereinheit (20) nach dem Auslösen der Stromversorgung der Steuereinheit (20) der Anhänger-Schnittstellenbox (2) so eingerichtet ist, dass sie ein Steuersignal zum Halten der Stromversorgung an das Schaltelement (25) sendet, das so eingerichtet ist, dass es die Aktivierung des Schaltelements (25) und damit die Stromversorgung der Steuereinheit (20) der Anhänger-Schnittstellenbox (2) nach dem Aufwecksteuersignal aufrechterhält.

3. System nach einem der vorhergehenden Ansprüche, **dadurch gekennzeichnet, dass** die Anhänger-Schnittstellenbox (2) einen nominalen Standby-Zustand, in dem das Leistungsschaltelement (25) aktiviert ist, und einen tiefen Standby-Zustand, in dem das Leistungsschaltelement (25) deaktiviert ist, aufweist, wobei der Fahrzeug-Zentralcomputer (1) so eingerichtet ist, dass er das Aufweck-Steuersignal beim Aufwecken nur dann sendet, wenn sich die Anhänger-Schnittstellenbox (2) im tiefen Standby befindet.

4. System nach dem vorhergehenden Anspruch, **dadurch gekennzeichnet, dass** der Fahrzeug-Zentralcomputer (1) so eingerichtet ist, dass er einen Deep-Standby-Rahmen über ein Multiplex-Netzwerk (BUS_2) an die Anhänger-Schnittstellenbox (2) sendet.

5. System nach einem der vorhergehenden Ansprüche, **dadurch gekennzeichnet, dass** die Anhänger-Schnittstellenbox (2) nur an eine von der Stromversorgungseinrichtung (3) bereitgestellte permanente Stromversorgung (+PERM) angeschlossen ist.

6. System nach einem der vorhergehenden Ansprüche, **dadurch gekennzeichnet, dass** die Steuereinheit (20) der Anhängerschnittstellenbox (2) einen Aufwach-Eingang umfasst, der mit der drahtgebundenen Verbindung zur Übertragung des Bremslicht-Steuersignals verbunden und so angeordnet ist, dass er das Aufwach-Steuersignal empfängt, wobei die Steuereinheit (20) so angeordnet ist, dass sie bei Empfang des Aufwach-Steuersignals an dem Signaleingang in einen aufgeweckten Zustand schaltet.

7. System nach einem der vorhergehenden Ansprüche, **dadurch gekennzeichnet, dass** das Stromversorgungs-Schaltglied (25) einen von einem logischen ODER-Gatter (251) gesteuerten Schalter (250) mit zwei Steuereingängen umfasst, die jeweils mit der Steuereinheit (20) der Anhänger-Schnittstellenbox (2) und mit der verdrahteten Verbindung (FL_RQ1, FL_RQ2) verbunden sind.

8. Anhänger-Schnittstellenkasten (2) für ein Kraftfahrzeug (VT), der so angeordnet ist, dass er Lichter, die einen mit dem Kraftfahrzeug (VT) elektrisch verbundenen Anhänger (RQ) ausstatten, elektrisch versorgt und steuert, mit einer ersten Schnittstelle (26) zum Anschluss an eine externe Stromversorgung, die von einer elektrischen Stromversorgungsvorrichtung (3) des Kraftfahrzeugs (VT) geliefert wird, einer Einheit (20) zur Steuerung der elektrischen Stromversorgung und der Steuerung der Bremslichter des Anhängers (RQ), eine zweite Schnittstelle (24) zum Anschluss an eine externe verdrahtete Verbindung (FL_RQ1) zur Übertragung eines Steuersignals zum Einschalten von Anhänger-Bremsleuchten, **dadurch gekennzeichnet, dass** sie ein Stromversorgungs-Schaltglied (25) enthält, über das die genannte Steuereinheit (20) mit der ersten Verbindungsschnittstelle (26) verbunden ist, wobei das Stromversorgungsschaltelement (25) so angeordnet ist, dass es aktiviert wird und die Stromversorgung der Steuereinheit (20) bei Empfang eines Aufwachsteuersignals über die zweite Verbindungsschnittstelle (24) auslöst.

9. Anhänger-Interfacebox nach dem vorhergehenden Anspruch, **dadurch gekennzeichnet, dass** die Steuereinheit (20) so eingerichtet ist, dass sie nach dem Auslösen der Stromversorgung der Steuereinheit (20) ein Aufweck-Steuersignal an das Schaltglied (25) sendet, das dazu geeignet ist, die Aktivierung des Schaltglieds (25) und damit die Stromversorgung der Steuereinheit (20) nach dem Aufweck-Steuersignal aufrechtzuerhalten.

10. Kraftfahrzeug mit mindestens entweder einem Bordsystem nach einem der Ansprüche 1 bis 7 oder einer Anhängerschnittstellenbox nach einem der Ansprüche 8 oder 9.

## Claims

1. On-board motor vehicle system intended to electrically supply and control lights equipping a trailer (RQ) electrically connected to the motor vehicle (VT), comprising
- a central vehicle computer (1),
- a power supply device (3),
- a trailer interface box (2) connected to the power supply device (3) and comprising a unit (20) for controlling the power supply and the control of the brake lights fitted to the trailer (RQ), and
- a wired link (FL_RQ1, FL_RQ2), between the central vehicle control unit (1) and the trailer interface box (2), for transmitting a brake light control signal to signal vehicle braking,
in that
- the trailer interface box (2) comprises a power supply switching member (25), via which the control unit (20) is connected to the power supply device (3), said switching member (25) being connected to the wired link (FL_RQ1, FL_RQ2) for transmitting the brake light control signal;
- the vehicle central computer (1) is arranged to transmit a wake-up control signal through the wired brake light control signal transmission link (FL_RQ1, FL_RQ2);
- the power supply switch (25) is arranged to be activated and to trigger the power supply to the control unit (20) of the trailer interface box (2) upon receipt of the wake-up control signal through the wired link (FL_RQ1, FL_RQ2).

2. A system according to claim 1, **characterised in that**, after triggering the power supply to the control unit (20) of the trailer interface box (2), said control unit (20) is arranged to transmit to the switching member (25) a power-safety control signal adapted to maintain the activation of the switching member (25) and thus the power supply to the control unit (20) of the trailer interface box (2) after the wake-up control signal.

3. A system according to one of the preceding claims, **characterised in that**, the trailer interface box (2) having a nominal standby state, in which the power switch member (25) is activated, and a deep standby state, in which the power switch member (25) is deactivated, the vehicle central computer (1) is arranged to transmit said wake-up control signal upon waking up only if the trailer interface box (2) is in deep standby.

4. A system according to the preceding claim, **characterised in that**, the vehicle central computer (1) is arranged to transmit a deep sleep frame to the trailer interface box (2) via a multiplexed network (BUS_2).

5. System according to one of the preceding claims, **characterised in that** the trailer interface box (2) is connected only to a permanent power supply (+PERM) provided by the power supply device (3).

6. System according to one of the preceding claims, **characterised in that** the control unit (20) of the trailer interface box (2) comprises a wake-up input, connected to the wired link for transmission of the brake light control signal and arranged to receive the wake-up control signal, the control unit (20) being arranged to switch to a wake-up state on receipt of said wake-up control signal at said signal input.

7. A system according to one of the preceding claims, **characterised in that** the power supply switching device (25) comprises a switch (250) controlled by a logic OR gate (251) with two control inputs respectively connected to the control unit (20) of the trailer interface box (2) and to said wired link (FL_RQ1, FL_RQ2).

8. Trailer interface box (2) for a motor vehicle (VT), arranged to electrically supply and control the lights equipping a trailer (RQ) electrically connected to the motor vehicle (VT), comprising a first interface (26) for connection to an external power supply provided by an electrical power supply device (3) of the motor vehicle (VT), a unit (20) for controlling the electrical power supply and the control of the stop lights of the trailer (RQ), a second interface (24) for connection to an external wired link (FL_RQ1) for transmitting a control signal for switching on trailer brake lights, **characterised in that** it incorporates a power supply switching unit (25), via which said control unit (20) is connected to the first connection interface (26), said power supply switching member (25) being arranged to be activated and to trigger the power supply of said control unit (20) upon receipt of a wake-up control signal through the second connection interface (24).

9. Trailer interface box according to the preceding claim, **characterised in that**, after triggering the power supply to the control unit (20), said control unit (20) is arranged to transmit to the switching member (25) a power supply hold control signal adapted to maintain the activation of the switching member (25) and thus the power supply to the control unit (20) after the wake-up control signal.

10. Motor vehicle with at least either an on-board system according to one of claims 1 to 7 or a trailer interface box according to one of claims 8 or 9.
